# EUROPEAN PATENT SPECIFICATION

(11) **EP 4 538 780 B1**
(45) Date of publication and mention of the grant of the patent: **22.04.2026**
(21) Application number: 23826398.2
(22) Date of filing: 20.06.2023
(51) Int. Cl.: G02F 1/1333, G02F 1/1335, G02F 1/13363

(54) **LIQUID CRYSTAL FUNCTIONAL FILM, DISPLAY APPARATUS AND TERMINAL**
FLÜSSIGKRISTALLFUNKTIONSFILM, ANZEIGEVORRICHTUNG UND ENDGERÄT
FILM FONCTIONNEL À CRISTAUX LIQUIDES, APPAREIL D'AFFICHAGE ET TERMINAL

(30) Priority: 23.06.2022 CN 202210727966
(43) Date of publication of application: 16.04.2025
(73) Proprietor: Huawei Technologies Co., Ltd., Shenzhen, Guangdong 518129 (CN)
(72) Inventor: CHANG, Yiwen, Shenzhen, Guangdong 518129 (CN); ZHAO, Chenxiang, Shenzhen, Guangdong 518129 (CN); LIU, Kang Chung, Shenzhen, Guangdong 518129 (CN)
(74) Representative: Maiwald GmbH
(86) International application number: PCT/CN2023/101299
(87) International publication number: WO 2023/246751

(56) References cited:
- CN-A- 102 879 942
- CN-A- 105 469 715
- CN-A- 111 999 933
- CN-U- 205 721 688
- JP-A- 2001 092 389
- US-A1- 2010 110 363
- US-A1- 2014 354 920
- US-A1- 2015 205 182
- US-B2- 8 368 729

## Description

### CROSS-REFERENCE TO RELATED APPLICATIONS

This application claims priority to Chinese Patent Application No. 202210727966.X, filed with the China National Intellectual Property Administration on June 23, 2022 and entitled "LIQUID CRYSTAL FUNCTIONAL FILM, DISPLAY APPARATUS, TERMINAL, AND RELATED PREPARATION METHOD".

### TECHNICAL FIELD

This application relates to the field of display technologies, and in particular, to a liquid crystal functional film, a display apparatus and a terminal.

### BACKGROUND

With development and progress of science and technology, human-computer interactions are getting frequent. Touch in a mainstream interaction technology needs to be operated and fed back through a "display". The same is true for obtaining information sources. This phenomenon is more significant with growth in use of mobile terminal products and an explosion in a quantity of users. As a result, requirements for performance or appearance of the display are increasingly strict, from monochromatic to polychromatic to a current high-color display. In addition, brightness is increased from 250 nits to 1000 nits for readability in sunlight. High dynamic range imaging (high dynamic range imaging, HDR) even delivers peak brightness of at least 3000 nits. However, in different application scenarios, a user has different hardware requirements for displays of various products. For example, the user expects that a television is more suitable for indoor space layout, a monitor in an office or a special application scenario is more fashionable, and a monitor of a notebook computer and a display of a mobile product are lighter and thinner. A common requirement for all displays is an all-screen display technology. The all-screen display technology provides a user with a hardware form for an ultimate front view when the user obtains information from a display, for example, a narrow frame (reducing an edge of a conventional monitor), no splicing gap (a large splicing screen), or a frame-less technology (a curved display of a mobile phone). In recent years, an all-screen display technology that hides a front-facing camera has been developed on mobile phones. Regardless of a type of all-screen display, an ultimate goal is to provide users with a visual sense of a larger region for a fixed area.

### SUMMARY

This application provides a liquid crystal functional film, a display apparatus and a terminal, to implement an all-screen effect in a visual sense.

According to a first aspect, the claimed invention provides a liquid crystal functional film, configured to be disposed in a non-display region and on a light exit side of a display panel. The liquid crystal functional film comprises a substrate, an alignment layer located on the substrate, and a liquid crystal layer located on the alignment layer. Alignment molecules in the alignment layer are regularly and periodically arranged in a direction. Orientation directions of liquid crystal molecules in the liquid crystal layer follow an arrangement rule of the alignment molecules to present regular and periodic arrangement and form a polarization grating (polarization grating, PG). The polarization grating is configured to deflect light obliquely emergent from a display region of the display panel to the non-display region to be emergent in a front viewing direction of the non-display region. It should be noted that the front viewing direction is a direction close to a perpendicularly emergent direction. For example, light emergent at 90 ± 10 degrees is emergent in the front viewing direction. Light is emergent in all directions from a light exit surface of the display panel. The light obliquely emergent from the display region to the non-display region is used in this application. The oblique light is deflected above the non-display region through the polarization grating to be emergent in the front viewing direction. In a visual sense, a human eye considers the light emergent in the front viewing direction as a virtual image displayed in the non-display region, so that a visually narrow-frame or frame-less effect can be achieved, to implement a visually all-screen effect.

Specifically, a long-axis direction of the liquid crystal molecule is generally defined as the orientation direction. In an embodiment of this application, the liquid crystal molecules at different positions in the liquid crystal functional film have different orientation directions and are regularly and periodically arranged in a direction to form the polarization grating. The direction may be defined as a grating direction of the polarization grating. When phase retardation of the polarization grating for transmitted light meets a λ/2 condition, the polarization grating has the following function: After circularly polarized light passes through the polarization grating of the liquid crystal functional film, an optical activity changes. Left-handed circularly polarized (left circular polarized, LCP) light is converted into right-handed circularly polarized (right circular polarized, RCP) light after passing through the polarization grating. In addition, the emergent right-handed circularly polarized light is deflected by a specific angle. That is, there is a deflection angle θ between incident light and emergent light of the polarization grating. Right-handed circularly polarized light is converted into left-handed circularly polarized light after passing through the polarization grating. In addition, the emergent left-handed circularly polarized light is deflected by a specific angle. That is, there is a deflection angle θ between incident light and emergent light of the polarization grating. After left-handed circularly polarized light and right-handed circularly polarized light with a same wavelength pass through the same polarization grating, deflection angles θ are the same but deflection directions are opposite. When incident light of the liquid crystal functional film is unpolarized light (also referred to as natural light) or linearly polarized light, because the unpolarized light or linearly polarized light may be decomposed into two beams of orthogonal circularly polarized light (namely, left-handed circularly polarized light and right-handed circularly polarized light), emergent light of the liquid crystal functional film is split into two beams of light, namely, left-handed circularly polarized light and right-handed circularly polarized light, which are emergent in opposite deflection directions.

To implement an effect of the polarization grating, the liquid crystal molecules at different positions have different orientation directions in one arrangement periodicity of the liquid crystal molecules in the liquid crystal functional film. Specifically, in the arrangement periodicity, the liquid crystal molecules at different positions may sequentially rotate by an angle in an axial direction on a plane parallel to the substrate. Based on a definition of an azimuth, it may be considered that azimuths of the liquid crystal molecules at different positions change. Specifically, the arrangement periodicity may be a distance corresponding to rotation of the liquid crystal molecules at different positions by 180 degrees or 360 degrees in the axial direction. It may be considered that in the arrangement periodicity, the long-axis direction of the liquid crystal molecule at the start of the periodicity is arranged in the axial direction (for example, an x-axis direction or a y-axis direction). The long-axis directions of the liquid crystal molecules at different positions sequentially rotate in the axial direction (for example, the x-axis direction or the y-axis direction), specifically, may rotate clockwise or counterclockwise. It should be noted that it may be considered that polarization gratings formed through clockwise rotation and counterclockwise rotation have opposite grating directions. The long-axis direction of the liquid crystal molecule at the end of the periodicity finally rotates by 180 degrees or 360 degrees relative to the long-axis direction of the liquid crystal molecule at the start of the periodicity. For example, on an xy plane, the x-axis direction is defined as the grating direction. Liquid crystal molecules at different positions (corresponding to different x-coordinates) in an arrangement periodicity have different orientation directions. An azimuth α is an included angle between the long-axis direction of the liquid crystal molecule and an x-axis. P1 and P2 are arrangement periodicities. If the arrangement periodicity is defined as a distance corresponding to rotation of the liquid crystal molecules by 180 degrees along the x-axis on the xy plane, α(x) = πx/P1. If the arrangement periodicity is defined as a distance corresponding to rotation of the liquid crystal molecules by 360 degrees along the x-axis on the xy plane, α(x) = 2πx/P2. Long-axis directions of liquid crystal molecules at two ends of an arrangement periodicity may alternatively be the same as the y-axis direction.

In an embodiment of this application, a deflection angle θ of the polarization grating formed in the liquid crystal functional film for circularly polarized light is an angle between an incident angle and an emergent angle. The deflection angle θ is related to both the arrangement periodicity P of the polarization grating and a wavelength of incident light. When other conditions remain unchanged, reducing the arrangement periodicity P of the polarization grating can increase the deflection angle θ of the polarization grating. Therefore, arrangement periodicities of liquid crystal molecules in different regions of the liquid crystal layer may be set to be different or the same as required. For example, in the liquid crystal functional film, a polarization grating disposed in a first region away from the display region of the display panel has a smaller arrangement periodicity than that in a second region close to the display region. An inclination angle of light emergent from the display region to the first region is larger than an inclination angle of light emergent from the display region to the second region. To ensure that the light emergent from the display region with the larger inclination angle is deflected to the front viewing direction, namely, a direction close to a perpendicularly emergent angle, in the first region, a larger deflection angle θ is needed in the first region. Therefore, polarization gratings whose arrangement periodicities gradually decrease may be disposed in different regions of the liquid crystal functional film in a direction away from the display region, so that a light intensity gradually changes. Alternatively, for ease of manufacturing, polarization gratings with a same arrangement periodicity may be disposed in different regions of the liquid crystal functional film. Specifically, the arrangement periodicity of the polarization grating in the liquid crystal functional film is generally any value that ranges from 0.5 µm to 200 µm.

A change in an arrangement direction of the liquid crystal molecules in the liquid crystal functional film, namely, the grating direction of the polarization grating, results in a change in a deflection direction of a same beam of circularly polarized light passing through the polarization grating. Different positions of the non-display region in the display panel are located on different sides of the display region. For example, the non-display region used as a frame is disposed around the display region. A right frame is located on a right side of the display region, and a left frame is located on a left side of the display region. Therefore, to ensure that oblique light emergent from the display region to the non-display region can be deflected to the front viewing direction through the polarization grating, the liquid crystal functional film may be designed based on a shape and position of the non-display region to form polarization gratings with different grating directions in different regions, to control different light to be deflected and emergent in a direction close to the perpendicularly emergent direction. In this way, the visually narrow-frame or frame-less effect is achieved, to implement the visually all-screen effect.

In an embodiment of this application, a chiral material may further be doped in a liquid crystal material of the liquid crystal layer, so that the liquid crystal molecules are twisted clockwise or counterclockwise in a thickness direction (z-axis direction).

In an embodiment of this application, a single liquid crystal layer or a plurality of stacked liquid crystal layers may be disposed in the liquid crystal functional film. The single liquid crystal layer can refract visible light of a single band. The plurality of stacked liquid crystal layers can refract visible light of a plurality of bands, to implement high diffraction efficiency. During specific manufacturing, after one liquid crystal layer is formed, steps of coating with the liquid crystal molecules and curing of the liquid crystal molecules may be repeated. That is, a process of coating-curing-coating-curing-... is repeated, to form the plurality of stacked liquid crystal layers. A total thickness of the formed liquid crystal layers may be below 200 µm.

According to a second aspect, embodiments of the claimed invention further provide a display apparatus, including a display panel and the liquid crystal functional film located on a light exit side of the display panel according to the first aspect or various implementations of the first aspect. A polarization grating in the liquid crystal functional film may cover at least a part of a non-display region of the display panel. The polarization grating may deflect light obliquely emergent from a display region of the display panel to the non-display region to be emergent in a front viewing direction of the non-display region, to implement a visually all-screen effect. In the display apparatus provided in embodiments of this application, a patterned liquid crystal functional film is disposed on a light exit side of a display panel, so that a light propagation direction is changed and light obliquely emergent from a display region of the display panel to a non-display region is deflected to a front viewing direction of the non-display region, to implement an all-screen effect in a visual sense. For example, a black edge of a screen, a black edge of a hole for a front-facing camera, and the like may be eliminated. In addition, because a screen frame is eliminated, this application may also be applied to a foldable screen, a splicing screen, or the like.

The display panel in the display apparatus provided in embodiments of this application may be a liquid crystal display (liquid crystal display, LCD) panel, an organic light-emitting diode (organic light-emitting diode, OLED) display panel, a micro-light-emitting diode (micro-LED) display panel, or the like. Generally, light emergent from LCDs and OLED displays is linearly polarized light. To ensure that incident light of the liquid crystal functional film is circularly polarized light, one or more phase retardation films (which may also be referred to as phase retardation sheets) may be added between the liquid crystal functional film and the display panel. The phase retardation film may be, for example, a quarter-wave plate or the like. The phase retardation film should cover at least the polarization grating in the liquid crystal functional film. A size of the phase retardation film may alternatively be set to be larger than that of the polarization grating. For example, the size of the phase retardation film may be consistent with that of the liquid crystal functional film. After passing through the phase retardation film, light emergent from the display panel is converted into circularly polarized light, which is then deflected through the polarization grating in the liquid crystal functional film. Light obliquely emergent from a part of the display region close to the non-display region is deflected to the front viewing direction of the non-display region, so that the frame is narrowed or even disappears in a visual sense.

In an embodiment of this application, the display apparatus may further include a cover. The liquid crystal functional film may be disposed on an outer side of the cover. In other words, the cover is located between the liquid crystal functional film and the display panel. Alternatively, the liquid crystal functional film may be disposed on an inner side of the cover. In other words, the cover is located on the liquid crystal functional film.

In an embodiment of this application, the polarization grating in the liquid crystal functional film may cover the entire non-display region of the display panel. The polarization grating may deflect light obliquely emergent from the display region of the display panel to the non-display region to be emergent in the front viewing direction of the entire non-display region, to implement a visually all-screen effect.

In an embodiment of this application, the polarization grating in the liquid crystal functional film may further cover a part that is of the display region and that is adjacent to the non-display region. In addition, in a direction from the display region to the non-display region, arrangement periodicities of polarization gratings may be designed to gradually change. Polarization gratings whose arrangement periodicities gradually decrease may be disposed in different regions of the liquid crystal functional film in a direction away from the display region. In this way, a light intensity between the display region and the non-display region can gradually change, to ensure a good display effect. It should be noted that the size of the liquid crystal functional film may be consistent with that of the display panel. However, the polarization grating in the liquid crystal functional film cannot cover the entire display region of the display panel.

In an embodiment of this application, one or more liquid crystal functional films may be disposed above the display panel. A decrease L in a frame width is related to a deflection angle θ and a distance D between a light-emitting surface (namely, a light exit surface of the display panel) and the polarization grating, where tanθ = L/D. A polarization grating in one liquid crystal functional film can deflect incident light at a specific inclination angle to be emergent in the front viewing direction. After a plurality of liquid crystal functional films are stacked, polarization gratings at a same position of two adjacent liquid crystal functional films need to have opposite grating directions, to ensure that light can be continuously deflected to a side after passing through the plurality of stacked liquid crystal functional films. This can increase the deflection angle, so that more oblique light emergent from the display region is deflected to be emergent in the front viewing direction. In this way, when other conditions remain unchanged, the decrease L in the frame width can be larger.

In an embodiment of this application, the non-display region of the display panel may include one or a combination of a frame region, a hole region, and a bending region. The non-display region in the display panel may be an outer frame surrounding the display region. The polarization grating in the liquid crystal functional film may cover the outer frame and a part that is of the display region and that is adjacent to the outer frame. The polarization grating may deflect light obliquely emergent from the display region to the outer frame to be emergent in a front viewing direction of the outer frame, to eliminate a black edge of a screen and achieve a narrow-frame or frame-less display effect in the visual sense. The non-display region in the display panel may alternatively be a peripheral frame of a front-facing camera. The polarization grating in the liquid crystal functional film covers a part that is of the display region and that is adjacent to the peripheral frame of the front-facing camera. The polarization grating may further cover the peripheral frame of the front-facing camera. The polarization grating may deflect light obliquely emergent from the display region to the peripheral frame of the front-facing camera to be emergent in a front viewing direction of the peripheral frame of the front-facing camera, to eliminate a black edge of a hole for the front-facing camera and achieve a narrow-frame or frame-less display effect in the visual sense. The display panel may be a flexible panel, and may be bent along a bending axis. The non-display region of the display panel may alternatively be a bending region in which no display is performed. The polarization grating in the liquid crystal functional film may cover the bending region. The polarization grating may deflect light obliquely emergent from the display region to the bending region to be emergent in a front viewing direction of the bending region, to eliminate a crease of a foldable screen and achieve a display effect of no crease in the visual sense.

In an embodiment of this application, the grating directions of the polarization gratings in the liquid crystal functional film may be specifically designed based on a shape of the non-display region that needs to be covered in the display panel. That is, the grating directions of the polarization gratings in the liquid crystal functional film may be different based on a frame shape. For example, for a linear frame, grating directions at different positions of the liquid crystal functional film on a same side frame (for example, a left frame) may be consistent. For a circular frame, grating directions at different positions of the liquid crystal functional film may be designed to be arranged in an axial direction.

In an embodiment of this application, the display panel may be one display module or a plurality of display modules spliced with each other. The plurality of display modules spliced with each other may form a splicing screen. Because the polarization grating can eliminate a screen frame of each display module, a display effect of eliminating a black line or a bright line at a splicing gap of the splicing screen in the visual sense can also be achieved.

According to a third aspect, embodiments of the claimed invention further provide a terminal, including a housing and the display apparatus according to the second aspect or various implementations of the second aspect. The terminal provided in this application can be used in all products for which a non-display region of a screen needs to be reduced, such as a monitor, a head-up display, lighting, and a vehicle lamp.

According to a fourth aspect, embodiments not according to the claimed invention further provide a method for preparing a liquid crystal functional film. Specific steps of the method are as follows:

First, a substrate is coated with an alignment material. The alignment material may be a photoalignment material. An orientation of the photoalignment material may be implemented through exposure. The photoalignment material is aligned through exposure to form an alignment layer. Ultraviolet (ultraviolet, UV) light or visible light may be used for exposure. A light band selected for exposure is specifically determined by a characteristic of the photoalignment material. For example, 365nm or 325nm UV light may be selected, or a blue light band of 400 nm to 450 nm may be selected for the visible light. An exposure manner may be exposure through a single light source or interference exposure through a plurality of light beams, for example, interference exposure through two beams of circularly polarized light. After the alignment is completed, an arrangement rule formed by alignment molecules in the alignment layer is regular and periodic arrangement in a direction. Arrangement periodicities in different regions of the alignment layer may be designed based on a specific requirement, and may be the same or different. Preferably, the arrangement periodicity may be any value that ranges from 0.5 µm to 200 µm. Grating directions in different regions may be designed to match the shape of the non-display region in the display panel, and may be the same or different.

After the alignment layer is prepared, the alignment layer is coated with liquid crystal molecules. The liquid crystal molecules may be made of a polymer material. Orientation directions of the liquid crystal molecules follow the arrangement rule of the alignment molecules in the alignment layer to present regular and periodic arrangement and form a polarization grating. The liquid crystal molecules may be cured through lighting or heating, so that a liquid crystal layer can be formed. Specifically, the polymer material may be polymerized and cured into a film under conditions such as lighting, heating, or the like. Further, a chiral material may be doped in a coated liquid crystal material, so that the liquid crystal molecules are twisted clockwise or counterclockwise in a thickness direction (z-axis direction). Further, after one liquid crystal layer is formed, steps of coating with the liquid crystal molecules and curing of the liquid crystal molecules may be repeated. That is, a process of coating-curing-coating-curing-... is repeated, to form a plurality of stacked liquid crystal layers. A total thickness of the formed liquid crystal layers may be below 200 µm. A single liquid crystal layer can refract visible light of only one band. The plurality of stacked liquid crystal layers can refract visible light of a plurality of bands, to implement high diffraction efficiency.

After the liquid crystal functional film is manufactured, the liquid crystal functional film may be placed above the light exit side of the display panel. Specifically, the polarization grating in the liquid crystal functional film needs to cover at least a part of the non-display region in the display panel. The polarization grating may further cover a part that is of the display region in the display panel and that is adjacent to the non-display region, to ensure that light obliquely emergent from an edge of the display region to the non-display region can be deflected to a direction close to that perpendicular to the substrate after passing through the polarization grating, that is, light finally passing through the polarization grating is emergent in a direction approximately perpendicular to the substrate, but not all light is necessarily emergent perpendicularly. In this way, light emergent from the non-display region can be perceived in the visual sense, to achieve a display effect that the non-display region is narrowed or disappears visually.

Further, to ensure that light incident to the liquid crystal functional film is circularly polarized light, one or more phase retardation films (which may also be referred to as phase retardation sheets) may be added between the liquid crystal functional film and the display panel based on a specific structure design requirement. The phase retardation film may be, for example, a quarter-wave plate or the like. It should be noted that the phase retardation film should cover at least the polarization grating in the liquid crystal functional film. A size of the phase retardation film may alternatively be set to be larger than that of the polarization grating. For example, the size of the phase retardation film may be consistent with that of the liquid crystal functional film.

For technical effects that may be achieved by any one of the second to fourth aspects, refer to descriptions of technical effects that may be achieved by any possible design in the first aspect. Details are not described herein again.

### BRIEF DESCRIPTION OF DRAWINGS

FIG. 1 is a diagram of a structure of a liquid crystal functional film according to an embodiment of this application;
FIG. 2a to FIG. 2c are diagrams of optical paths of different light passing through a polarization grating of a liquid crystal functional film according to an embodiment of this application;
FIG. 3 is a diagram of an arrangement rule of liquid crystal molecules in a liquid crystal functional film according to an embodiment of this application;
FIG. 4a is a diagram of an arrangement rule of liquid crystal molecules in a liquid crystal functional film on an xy plane according to an embodiment of this application;
FIG. 4b is a diagram of an arrangement rule of liquid crystal molecules in a liquid crystal functional film on an xz plane according to an embodiment of this application;
FIG. 5 is a diagram of a relationship between an arrangement periodicity and a deflection angle of a polarization grating in a liquid crystal functional film according to an embodiment of this application;
FIG. 6 is a diagram of an optical path when a grating direction of a polarization grating in a liquid crystal functional film changes according to an embodiment of this application;
FIG. 7 is a diagram of a structure of a liquid crystal functional film including two liquid crystal layers according to an embodiment of this application;
FIG. 8 is a diagram of a structure of a display apparatus according to an embodiment of this application;
FIG. 9 is a diagram of an optical path of a display apparatus including a plurality of liquid crystal functional films according to an embodiment of this application;
FIG. 10 is a principle diagram of an optical path of a display apparatus according to an embodiment of this application;
FIG. 11 is a diagram of a structure of a display apparatus with a polarization grating disposed on an outer frame according to an embodiment of this application;
FIG. 12 is a diagram of a structure of a front-facing camera region of a display apparatus according to an embodiment of this application;
FIG. 13 is a diagram of a structure of a display apparatus with a polarization grating disposed in a front-facing camera region according to an embodiment of this application;
FIG. 14 is a diagram of a structure of a display apparatus with a linear frame according to an embodiment of this application;
FIG. 15 is a diagram of a structure of a display apparatus with a circular frame according to an embodiment of this application; and
FIG. 16 is a diagram of a structure of a display apparatus with a splicing screen according to an embodiment of this application.

### Reference numerals:

1: substrate; 2: alignment layer; 3: liquid crystal layer; 31: liquid crystal molecule; 30: polarization grating; 100: liquid crystal functional film; 200: display panel; 300: phase retardation film; A: display region; C: non-display region; M: first region; N: second region.

### DESCRIPTION OF EMBODIMENTS

To make the objectives, technical solutions, and advantages of this application clearer, the following further describes this application in detail with reference to the accompanying drawings. However, example embodiments may be implemented in a plurality of forms and should not be construed as being limited to embodiments described herein. On the contrary, these embodiments are provided such that this application is more comprehensive and complete and fully conveys the concept of the example embodiments to persons skilled in the art. Identical reference numerals in the accompanying drawings denote identical or similar structures. Therefore, repeated description thereof is omitted. Expressions of positions and directions in this application are described by using the accompanying drawings as an example. However, changes may also be made as required, and all the changes fall within the protection scope of this application if they are within the scope of the appended claims. The accompanying drawings in this application are merely used to illustrate relative position relationships and do not represent an actual scale.

It should be noted that specific details are provided in the following descriptions for ease of fully understanding this application. However, this application can be implemented in a plurality of manners different from those described herein, and persons skilled in the art can perform similar promotion without departing from the connotation of this application. Therefore, this application is not limited to the following disclosed specific implementations. The following descriptions of this specification are example manners of implementing this application. However, the descriptions are intended to describe the general principle of this application, and are not intended to limit the scope of this application. The protection scope of this application shall be defined by the appended claims.

To facilitate understanding of embodiments of this application, the following first describes some terms used in embodiments of this application.

Liquid crystal: It is a state of matter and has a specific spatial order. A common liquid crystal molecule has a rod-like structure. Due to anisotropy of liquid crystal molecules, a refractive index and relative permittivity in a long-axis direction are different from those in a short-axis direction.

Liquid crystal polymer: Some liquid crystal molecules have groups that can undergo polymerization. Under heating or lighting conditions, molecular groups react and are chained. Initial micromolecules are combined into a polymer macromolecule. The liquid crystal loses its liquid fluidity and enters a solid state.

Liquid crystal pretilt angle and azimuth: Generally, position information of a liquid crystal molecule may be determined through a pretilt angle and an azimuth. An included angle between a projection of the liquid crystal molecule on an xy plane and an x-axis is defined as an azimuth α. An included angle between the liquid crystal molecule and the projection on the xy plane is defined as a pretilt angle.

Alignment layer: Generally, orientations of liquid crystal molecules depend on the alignment layer. There is an intermolecular force between liquid crystal molecules close to the alignment layer and molecules in the alignment layer. The liquid crystal molecules are arranged in orientation directions of the molecules in the alignment layer. The other molecules in a liquid crystal layer follow orientations of the liquid crystal molecules close to the alignment layer through a long-range force.

Alignment: There are mainly two alignment modes for the alignment layer: physical contact (friction) and non-contact (photoalignment). In friction mode, the molecules in the alignment layer are arranged in a direction after contact friction between lint and the alignment layer. In photoalignment mode, light is used for alignment, and a light band, such as ultraviolet (UV) light or visible light, is selected based on a material characteristic of the alignment layer. Arrangement of the molecules in the alignment layer is generally related to a polarization direction of the light.

Polarized light: In a propagation direction of light, a light vector vibrates in a direction. If a projection trajectory of a light vector endpoint on the xy plane is a straight line, the light is called linearly polarized light. If the trajectory of the light vector endpoint is a circle, the light is called circularly polarized light. If the trajectory of the light vector endpoint is an ellipse, the light is called elliptically polarized light.

To facilitate understanding of a liquid crystal functional film, a display apparatus, a terminal, and a related preparation method provided in embodiments of this application, an application scenario is first described. The display apparatus may be used in various terminal products. The terminal products include a watch, a mobile phone, a tablet computer, a personal digital assistant (personal digital assistant, PDA), a vehicle-mounted computer, a monitor (monitor), a foldable screen, a splicing screen, a television (television, TV), and the like. A specific form of the terminal is not specially limited in embodiments of this application.

An all-screen display technology has different technical terms and technical paths based on product forms, including a flat all-screen display with a narrow (no) frame, a curved display with a narrow (no) frame, an ultra-large seamless splicing display, a display with a notch (an extremely small hole, a waterdrop-shaped notch, or a pill-shaped notch) due to a requirement for a front-facing camera, and a display with an under-display camera. Due to specific bottlenecks and limitations, the existing all-screen display technology cannot completely implement a visually all-screen effect.

Currently, there are two methods for implementing a narrow frame of a flat display. In one method, a circuit cabling area of a panel frame is deliberately reduced through an expensive design and panel manufacturing process, to achieve an actual design with a physical frame narrowed. In the other method, a visually narrow frame is implemented through an optical projection method. However, this frame narrowing method has a limitation that a thickness of an upper cover is proportional to a frame narrowing degree or an edge of the cover needs to have a special shape or curvature.

Based on application scenarios of mobile phones, to pursue an ultimate frame and visual limit, a curved display with a soft substrate is developed. This curved display can give an illusion of visual frame narrowing on a front side. However, the curved display brings a disadvantage of optically bright edges. When a user views the curved display at a non-frontal angle, side edges are bright, resulting in poor sensory experience. In addition, a mechanical strength of the curved display is reduced, and costs are high. Consequently, subsequent maintenance costs for the user during product use increase.

Currently, it is impossible to use single display panels in large quantities to implement 100-inch or larger displays in the industry. To meet an application requirement of an ultra-large screen, screen splicing is used in most solutions. However, due to a limitation of a display frame, most products have obvious black lines at splicing positions. In addition, in some solutions, an additional light source is used at a splicing position for repair, but visual brightness or chrominance perception at the position is still different, leading to a visual difference.

Due to special application requirements, a camera and a series of photosensitive elements disposed in the front of a mobile phone occupy a specific area, which does not meet an all-screen requirement. To achieve a larger display region, a technology of special-shaped display regions is developed to deliberately design a display region avoidance solution based on a component placement requirement. This type of common product includes display region designs with a common notch, an extremely small hole, a waterdrop-shaped notch, and the like, but these special-shaped display regions still do not meet the requirement of an all-screen display.

To achieve better user experience, a display with a special-shaped pixel design is developed. A display pixel and circuit design in front of a camera are different from those at another position. This improves a penetration rate of the display in front of the camera and achieves an all-screen design in which a display region covers a lens. This solution basically meets the all-screen requirement. However, this solution sacrifices a display level and reduces camera quality. To achieve a sufficient penetration rate in front of the camera, a pixel density at this position needs to be much lower than that at another position of the display. Consequently, when an image is played back, a display detail at this position is much less than that at another position, resulting in poor viewing quality. In addition, a low-density display pixel design in front of the lens causes a decrease in an amount of light into the lens. A diffraction grating is also formed for the display pixel and circuit cabling. A diffraction effect is generated before external light enters the camera, so that a clear image cannot be obtained, leading to blurred imaging and degraded quality.

In the display apparatus provided in embodiments of this application, a patterned liquid crystal functional film is disposed on a light exit side of a display panel, so that a light propagation direction is changed and light obliquely emergent from a display region of the display panel to a non-display region is deflected to a front viewing direction of the non-display region, to implement an all-screen effect in a visual sense. For example, a black edge of a screen, a black edge of a hole for a front-facing camera, and the like may be eliminated. In addition, because a screen frame is eliminated, this application may also be applied to a foldable screen, a splicing screen, or the like.

The following describes in detail a structure and a working principle of a liquid crystal functional film provided in embodiments of this application.

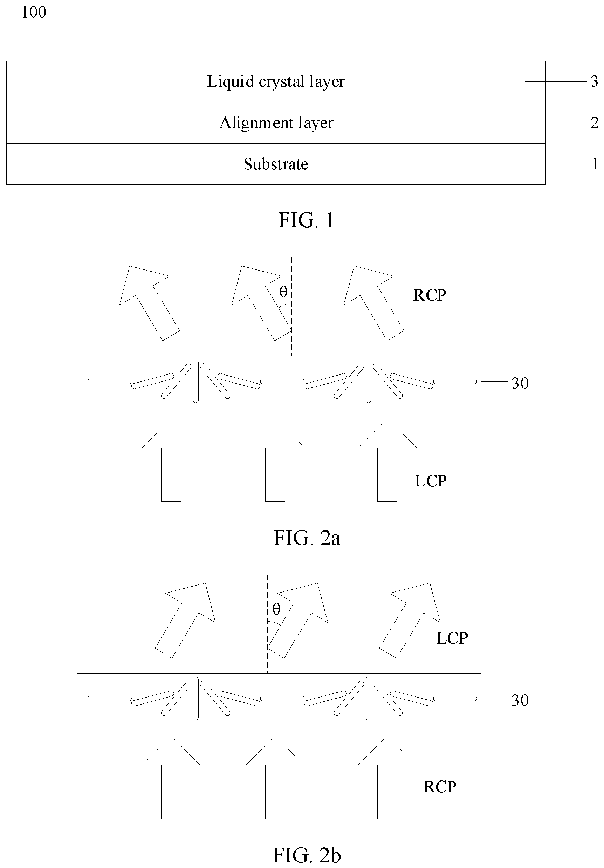

The liquid crystal functional film provided in embodiments of this application is disposed in a non-display region and on a light exit side of a display panel. With reference to FIG. 1, a liquid crystal functional film 100 includes a substrate 1, an alignment layer 2 located on the substrate 1, and a liquid crystal layer 3 located on the alignment layer 2. Alignment molecules in the alignment layer 2 are regularly and periodically arranged in a direction. Orientation directions of liquid crystal molecules 31 in the liquid crystal layer 3 follow an arrangement rule of the alignment molecules to present regular and periodic arrangement and form a polarization grating (polarization grating, PG) 30. The polarization grating 30 deflects light obliquely emergent from a display region A of a display panel 200 to a non-display region C to be emergent in a front viewing direction of the non-display region C. It should be noted that the front viewing direction is a direction close to a perpendicularly emergent direction. For example, light emergent at 90 ± 10 degrees is emergent in the front viewing direction. Light is emergent in all directions from a light exit surface of the display panel 200. The light obliquely emergent from the display region A to the non-display region C is used in this application. The oblique light is deflected above the non-display region C through the polarization grating 30 to be emergent in the front viewing direction. In a visual sense, a human eye considers the light emergent in the front viewing direction as a virtual image displayed in the non-display region C, so that a visually narrow-frame or frame-less effect can be achieved, to implement a visually all-screen effect.

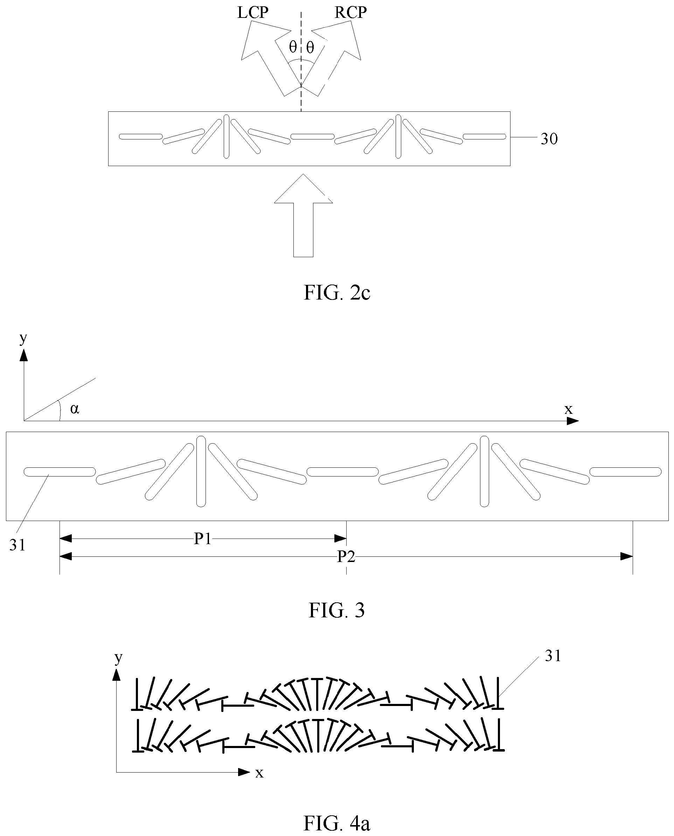

Specifically, a long-axis direction of the liquid crystal molecule 31 is generally defined as the orientation direction. In an embodiment of this application, the liquid crystal molecules 31 at different positions in the liquid crystal functional film 100 have different orientation directions and are regularly and periodically arranged in a direction to form the polarization grating 30. The direction may be defined as a grating direction of the polarization grating 30. When phase retardation of the polarization grating 30 for transmitted light meets a λ/2 condition, the polarization grating 30 has the following function: After circularly polarized light passes through the polarization grating 30 of the liquid crystal functional film 100, an optical activity changes. With reference to FIG. 2a, left-handed circularly polarized (left circular polarized, LCP) light is converted into right-handed circularly polarized (right circular polarized, RCP) light after passing through the polarization grating 30. In addition, the emergent right-handed circularly polarized light is deflected by a specific angle. That is, there is a deflection angle θ between incident light and emergent light of the polarization grating 30. With reference to FIG. 2b, right-handed circularly polarized light is converted into left-handed circularly polarized light after passing through the polarization grating 30. In addition, the emergent left-handed circularly polarized light is deflected by a specific angle. That is, there is a deflection angle θ between incident light and emergent light of the polarization grating 30. With reference to FIG. 2a and FIG. 2b, after left-handed circularly polarized light and right-handed circularly polarized light with a same wavelength pass through the same polarization grating 30, deflection angles θ are the same but deflection directions are opposite. With reference to FIG. 2c, when incident light of the liquid crystal functional film 100 is unpolarized light (also referred to as natural light) or linearly polarized light, because the unpolarized light or linearly polarized light may be decomposed into two beams of orthogonal circularly polarized light (namely, left-handed circularly polarized light and right-handed circularly polarized light), emergent light of the liquid crystal functional film 100 is split into two beams of light, namely, left-handed circularly polarized light and right-handed circularly polarized light, which are emergent in opposite deflection directions.

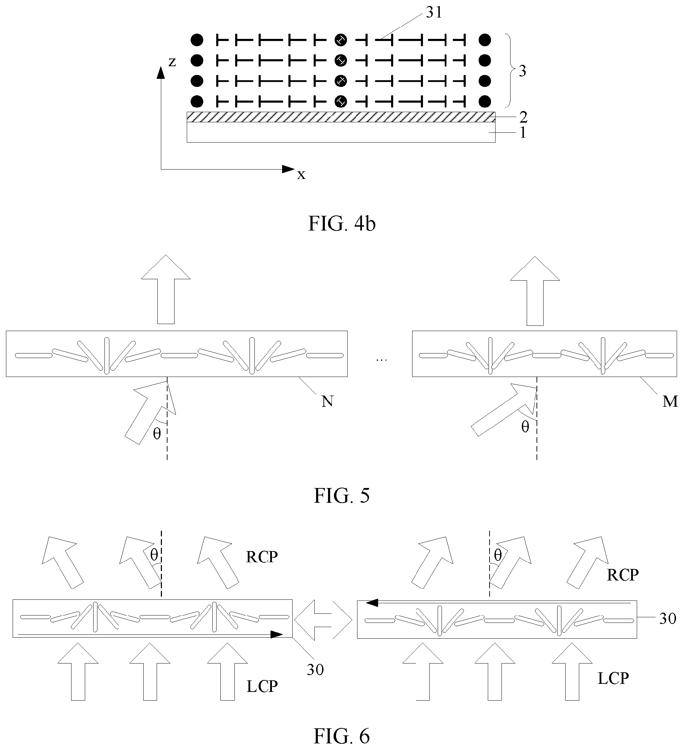

With reference to FIG. 3, to implement an effect of the polarization grating 30, the liquid crystal molecules 31 at different positions have different orientation directions in an arrangement periodicity of the liquid crystal molecules 31 in the liquid crystal functional film 100. Specifically, in the arrangement periodicity, the liquid crystal molecules 31 at different positions may sequentially rotate by an angle in an axial direction on a plane parallel to the substrate 1. Based on a definition of an azimuth, it may be considered that azimuths of the liquid crystal molecules 31 at different positions change. Specifically, the arrangement periodicity may be a distance corresponding to rotation of the liquid crystal molecules 31 at different positions by 180 degrees or 360 degrees in the axial direction. It may be considered that in the arrangement periodicity, the long-axis direction of the liquid crystal molecule 31 at the start of the periodicity is arranged in the axial direction (for example, an x-axis direction or a y-axis direction). The long-axis directions of the liquid crystal molecules 31 at different positions sequentially rotate in the axial direction (for example, the x-axis direction or the y-axis direction), specifically, may rotate clockwise or counterclockwise. It should be noted that it may be considered that polarization gratings 30 formed through clockwise rotation and counterclockwise rotation have opposite grating directions. The long-axis direction of the liquid crystal molecule 31 at the end of the periodicity finally rotates by 180 degrees or 360 degrees relative to the long-axis direction of the liquid crystal molecule 31 at the start of the periodicity. For example, as shown in FIG. 3, on an xy plane, the x-axis direction is defined as the grating direction. Liquid crystal molecules 31 at different positions (corresponding to different x-coordinates) in an arrangement periodicity have different orientation directions. An azimuth α is an included angle between the long-axis direction of the liquid crystal molecule 31 and an x-axis. P1 and P2 are arrangement periodicities. If the arrangement periodicity is defined as a distance corresponding to rotation of the liquid crystal molecules 31 by 180 degrees along the x-axis on the xy plane, α(x) = πx/P1. If the arrangement periodicity is defined as a distance corresponding to rotation of the liquid crystal molecules 31 by 360 degrees along the x-axis on the xy plane, α(x) = 2πx/P2. With reference to FIG. 4a and FIG. 4b, long-axis directions of liquid crystal molecules 31 at two ends of an arrangement periodicity may alternatively be the same as the y-axis direction.

With reference to FIG. 5, in an embodiment of this application, a deflection angle θ of the polarization grating 30 formed in the liquid crystal functional film 100 for circularly polarized light is an angle between an incident angle and an emergent angle. The deflection angle θ is related to both the arrangement periodicity P of the polarization grating 30 and a wavelength of incident light. When other conditions remain unchanged, reducing the arrangement periodicity P of the polarization grating 30 can increase the deflection angle θ of the polarization grating 30. Therefore, arrangement periodicities of liquid crystal molecules 31 in different regions of the liquid crystal layer 3 may be set to be different or the same as required. For example, in the liquid crystal functional film 100, a polarization grating 30 disposed in a first region M away from the display region A of the display panel 200 has a smaller arrangement periodicity than that in a second region N close to the display region A. An inclination angle of light emergent from the display region A to the first region M is larger than an inclination angle of light emergent from the display region A to the second region N. To ensure that the light emergent from the display region A with the larger inclination angle is deflected to the front viewing direction, namely, a direction close to a perpendicularly emergent angle, in the first region M, a larger deflection angle θ is needed in the first region M. Therefore, polarization gratings 30 whose arrangement periodicities gradually decrease may be disposed in different regions of the liquid crystal functional film 100 in a direction away from the display region A, so that a light intensity gradually changes. Alternatively, for ease of manufacturing, polarization gratings 30 with a same arrangement periodicity may be disposed in different regions of the liquid crystal functional film 100. Specifically, the arrangement periodicity of the polarization grating 30 in the liquid crystal functional film 100 is generally any value that ranges from 0.5 µm to 200 µm.

With reference to FIG. 6, a change in an arrangement direction of the liquid crystal molecules 31 in the liquid crystal functional film 100, namely, the grating direction of the polarization grating 30, results in a change in a deflection direction of a same beam of circularly polarized light passing through the polarization grating 30. In FIG. 6, an arrow is used to represent the grating direction. Different positions of the non-display region C in the display panel 200 are located on different sides of the display region A. For example, the non-display region C used as a frame is disposed around the display region A. A right frame is located on a right side of the display region A, and a left frame is located on a left side of the display region A. Therefore, to ensure that oblique light emergent from the display region A to the non-display region C can be deflected to the front viewing direction through the polarization grating 30, the liquid crystal functional film 100 may be designed based on a shape and position of the non-display region C to form polarization gratings 30 with different grating directions in different regions, to control different light to be deflected and emergent in a direction close to the perpendicularly emergent direction. In this way, the visually narrow-frame or frame-less effect is achieved, to implement the visually all-screen effect.

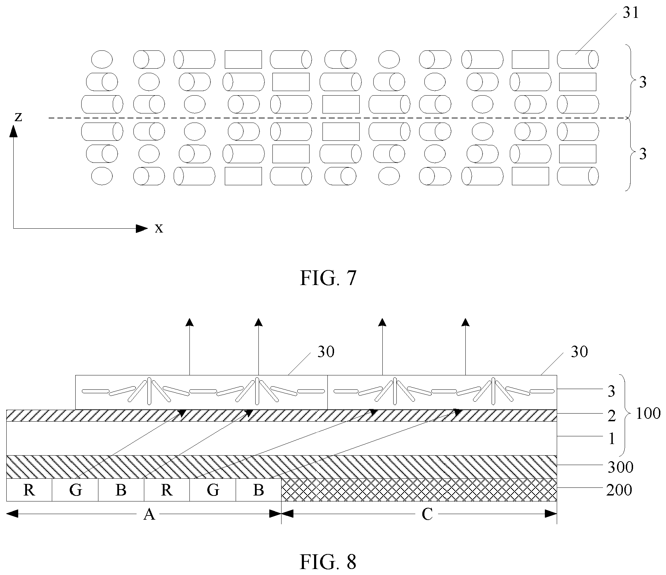

With reference to FIG. 7, in an embodiment of this application, a chiral material may further be doped in a liquid crystal material of the liquid crystal layer 3, so that the liquid crystal molecules 31 are twisted clockwise or counterclockwise in a thickness direction (z-axis direction).

With reference to FIG. 7, in an embodiment of this application, a single liquid crystal layer 3 or a plurality of stacked liquid crystal layers 3 may be disposed in the liquid crystal functional film 100. FIG. 7 shows a case of two liquid crystal layers 3. The single liquid crystal layer 3 can refract visible light of a single band. The plurality of stacked liquid crystal layers 3 can refract visible light of a plurality of bands, to implement high diffraction efficiency. During specific manufacturing, after one liquid crystal layer 3 is formed, steps of coating with the liquid crystal molecules 31 and curing of the liquid crystal molecules 31 may be repeated. That is, a process of coating-curing-coating-curing-... is repeated, to form the plurality of stacked liquid crystal layers 3. A total thickness of the formed liquid crystal layers 3 may be below 200 µm.

The following describes in detail a structure and a working principle of a display apparatus provided in embodiments of this application.

With reference to FIG. 8, the display apparatus provided in embodiments of this application includes a display panel 200 and the foregoing liquid crystal functional film 100 provided in embodiments of this application and located on a light exit side of the display panel 200. The polarization grating 30 in the liquid crystal functional film 100 may cover at least a part of a non-display region C of the display panel 200. The polarization grating 30 may deflect light obliquely emergent from a display region A of the display panel 200 to the non-display region C to be emergent in a front viewing direction of the non-display region C, to implement a visually all-screen effect.

The display panel 200 in the display apparatus provided in embodiments of this application may be a liquid crystal display (liquid crystal display, LCD) panel 200, an organic light-emitting diode (organic light-emitting diode, OLED) display panel 200, a micro-light-emitting diode (micro-LED) display panel 200, or the like. Generally, light emergent from LCDs and OLED displays is linearly polarized light. To ensure that incident light of the liquid crystal functional film 100 is circularly polarized light, with reference to FIG. 8, one or more phase retardation films 300 (which may also be referred to as phase retardation sheets) may be added between the liquid crystal functional film 100 and the display panel 200. The phase retardation film 300 may be, for example, a quarter-wave plate or the like. The phase retardation film 300 should cover at least the polarization grating 30 in the liquid crystal functional film 100. A size of the phase retardation film 300 may alternatively be set to be larger than that of the polarization grating 30. For example, the size of the phase retardation film 300 may be consistent with that of the liquid crystal functional film 100. After passing through the phase retardation film 300, light emergent from the display panel 200 is converted into circularly polarized light, which is then deflected through the polarization grating 30 in the liquid crystal functional film 100. Light obliquely emergent from a part of the display region A close to the non-display region C is deflected to the front viewing direction of the non-display region C, so that the frame is narrowed or even disappears in a visual sense.

In an embodiment of this application, the display apparatus may further include a cover. The liquid crystal functional film may be disposed on an outer side of the cover. In other words, the cover is located between the liquid crystal functional film and the display panel. Alternatively, the liquid crystal functional film may be disposed on an inner side of the cover. In other words, the cover is located on the liquid crystal functional film.

With reference to FIG. 8, in an embodiment of this application, the polarization grating 30 in the liquid crystal functional film 100 may cover the entire non-display region C of the display panel 200. The polarization grating 30 may deflect light obliquely emergent from the display region A of the display panel 200 to the non-display region C to be emergent in the front viewing direction of the entire non-display region C, to implement a visually all-screen effect.

With reference to FIG. 8, in an embodiment of this application, the polarization grating 30 in the liquid crystal functional film 100 may further cover a part that is of the display region A and that is adjacent to the non-display region C. In addition, in a direction from the display region A to the non-display region C, arrangement periodicities of polarization gratings 30 may be designed to gradually change. Polarization gratings 30 whose arrangement periodicities gradually decrease may be disposed in different regions of the liquid crystal functional film 100 in a direction away from the display region A. In this way, a light intensity between the display region A and the non-display region C can gradually change, to ensure a good display effect. It should be noted that the size of the liquid crystal functional film 100 may be consistent with that of the display panel 200. However, the polarization grating 30 in the liquid crystal functional film 100 cannot cover the entire display region A of the display panel 200.

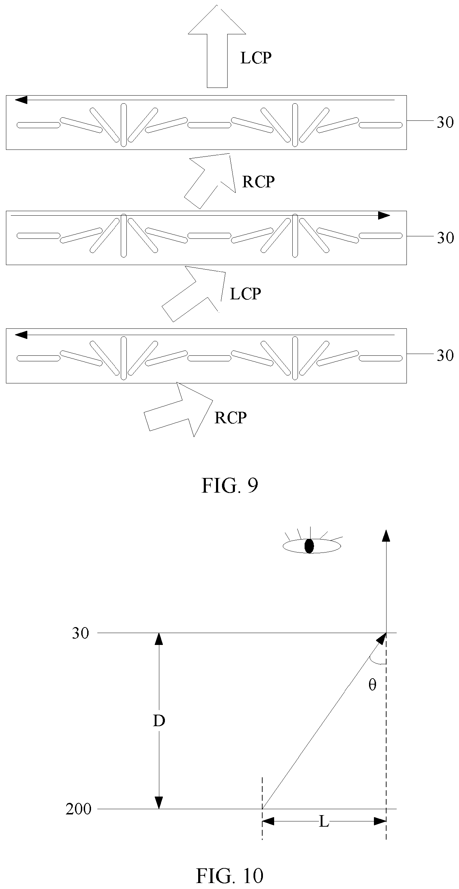

With reference to FIG. 9, in an embodiment of this application, one or more liquid crystal functional films 100 may be disposed above the display panel 200. With reference to FIG. 10, a decrease L in a frame width is related to a deflection angle θ and a distance D between a light-emitting surface (namely, a light exit surface of the display panel 200) and the polarization grating 30, where tanθ = L/D. A polarization grating 30 in one liquid crystal functional film 100 can deflect incident light at a specific inclination angle to be emergent in the front viewing direction. After a plurality of liquid crystal functional films 100 are stacked, polarization gratings 30 at a same position of two adjacent liquid crystal functional films 100 need to have opposite grating directions, to ensure that light can be continuously deflected to a side after passing through the plurality of stacked liquid crystal functional films 100. This can increase the deflection angle, so that more oblique light emergent from the display region A is deflected to be emergent in the front viewing direction. In this way, when other conditions remain unchanged, the decrease L in the frame width can be larger.

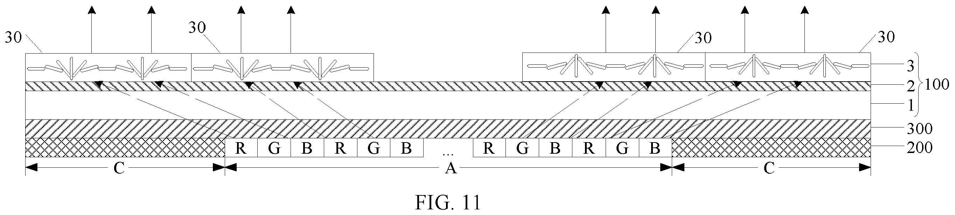

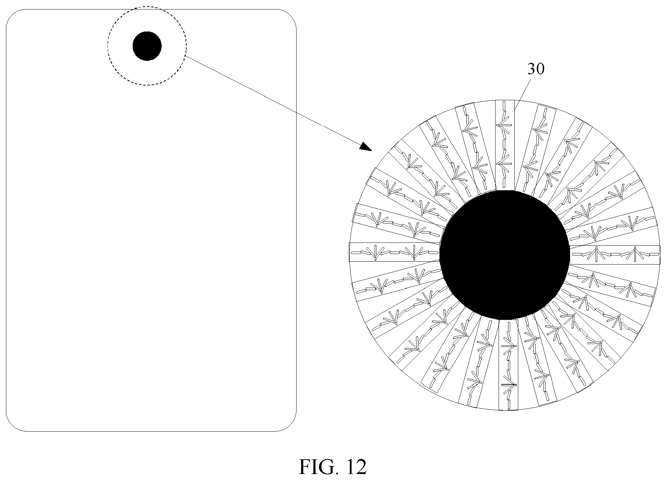

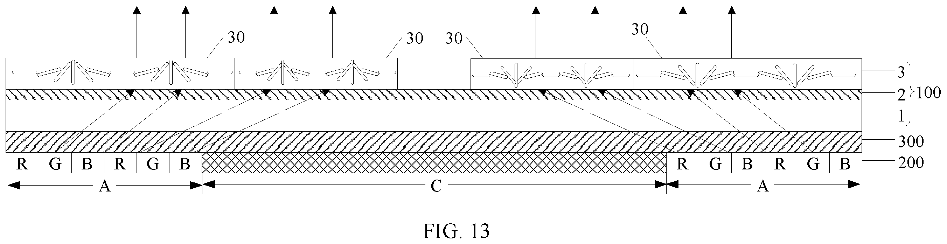

In an embodiment of this application, the non-display region C of the display panel 200 may include one or a combination of a frame region, a hole region, and a bending region. With reference to FIG. 11, the non-display region C in the display panel 200 may be an outer frame surrounding the display region A. The polarization grating 30 in the liquid crystal functional film 100 may cover the outer frame and a part that is of the display region A and that is adjacent to the outer frame. The polarization grating 30 may deflect light obliquely emergent from the display region A to the outer frame to be emergent in a front viewing direction of the outer frame, to eliminate a black edge of a screen and achieve a narrow-frame or frame-less display effect in the visual sense. With reference to FIG. 12 and FIG. 13, the non-display region C in the display panel 200 may alternatively be a peripheral frame of a front-facing camera. The polarization grating 30 in the liquid crystal functional film 100 covers a part that is of the display region A and that is adj acent to the peripheral frame of the front-facing camera. The polarization grating 30 may further cover the peripheral frame of the front-facing camera. The polarization grating 30 may deflect light obliquely emergent from the display region A to the peripheral frame of the front-facing camera to be emergent in a front viewing direction of the peripheral frame of the front-facing camera, to eliminate a black edge of a hole for the front-facing camera and achieve a narrow-frame or frame-less display effect in the visual sense. The display panel 200 may be a flexible panel, and may be bent along a bending axis. The non-display region C of the display panel 200 may alternatively be a bending region in which no display is performed. The polarization grating 30 in the liquid crystal functional film 100 may cover the bending region. The polarization grating 30 may deflect light obliquely emergent from the display region A to the bending region to be emergent in a front viewing direction of the bending region, to eliminate a crease of a foldable screen and achieve a display effect of no crease in the visual sense.

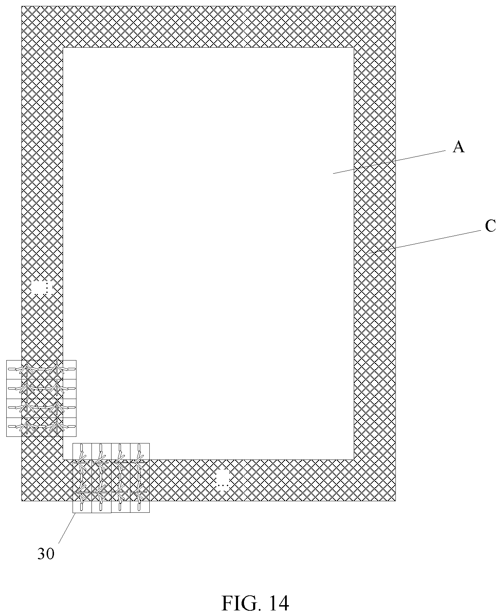

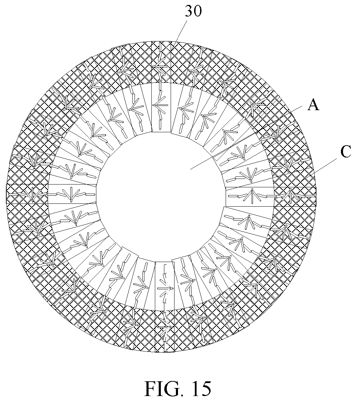

In an embodiment of this application, the grating directions of the polarization gratings 30 in the liquid crystal functional film 100 may be specifically designed based on a shape of the non-display region C that needs to be covered in the display panel 200. That is, the grating directions of the polarization gratings 30 in the liquid crystal functional film 100 may be different based on a frame shape. For example, with reference to FIG. 14, for a linear frame, grating directions at different positions of the liquid crystal functional film on a same side frame (for example, a left frame) may be consistent. With reference to FIG. 15, for a circular frame, grating directions at different positions of the liquid crystal functional film may be designed to be arranged in an axial direction.

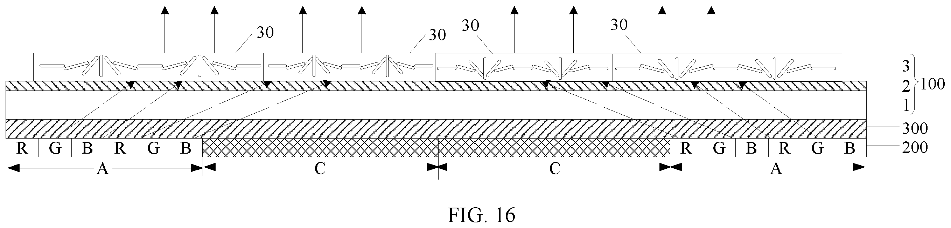

With reference to FIG. 16, in an embodiment of this application, the display panel 200 may be one display module or a plurality of display modules spliced with each other. The plurality of display modules spliced with each other may form a splicing screen. Because the polarization grating 30 can eliminate a screen frame of each display module, a display effect of eliminating a black line or a bright line at a splicing gap of the splicing screen in the visual sense can also be achieved.

Based on a same inventive concept, embodiments not according to the claimed invention further provide a method for preparing a liquid crystal functional film 100. Specific steps of the method are as follows:

First, a substrate 1 is coated with an alignment material. The alignment material may be a photoalignment material. An orientation of the photoalignment material may be implemented through exposure. The photoalignment material is aligned through exposure to form an alignment layer 2. Ultraviolet (ultraviolet, UV) light or visible light may be used for exposure. A light band selected for exposure is specifically determined by a characteristic of the photoalignment material. For example, 365nm or 325nm UV light may be selected, or a blue light band of 400 nm to 450 nm may be selected for the visible light. An exposure manner may be exposure through a single light beam or interference exposure through a plurality of light beams, for example, interference exposure through two beams of circularly polarized light. After the alignment is completed, an arrangement rule formed by alignment molecules in the alignment layer 2 is regular and periodic arrangement in a direction. Arrangement periodicities in different regions of the alignment layer 2 may be designed based on a specific requirement, and may be the same or different. Preferably, the arrangement periodicity may be any value that ranges from 0.5 µm to 200 µm. Grating directions in different regions may be designed to match the shape of the non-display region C in the display panel 200, and may be the same or different.

After the alignment layer 2 is prepared, the alignment layer 2 is coated with liquid crystal molecules 31. The liquid crystal molecules 31 may be made of a polymer material. Orientation directions of the liquid crystal molecules 31 follow the arrangement rule of the alignment molecules in the alignment layer 2 to present regular and periodic arrangement and form a polarization grating 30. The liquid crystal molecules 31 may be cured through lighting or heating, so that a liquid crystal layer 3 can be formed. Specifically, the polymer material may be polymerized and cured into a film under conditions such as lighting, heating, or the like. Further, a chiral material may be doped in a coated liquid crystal material, so that the liquid crystal molecules 31 are twisted clockwise or counterclockwise in a thickness direction (z-axis direction). Further, after one liquid crystal layer 3 is formed, steps of coating with the liquid crystal molecules 31 and curing of the liquid crystal molecules 31 may be repeated. That is, a process of coating-curing-coating-curing-... is repeated, to form a plurality of stacked liquid crystal layers 3. A total thickness of the formed liquid crystal layers 3 may be below 200 µm. A single liquid crystal layer 3 can refract visible light of only one band. The plurality of stacked liquid crystal layers 3 can refract visible light of a plurality of bands, to implement high diffraction efficiency.

After the liquid crystal functional film 100 is manufactured, the liquid crystal functional film 100 may be placed above the light exit side of the display panel 200. Specifically, the polarization grating 30 in the liquid crystal functional film 100 needs to cover at least a part of the non-display region C in the display panel 200. The polarization grating 30 may further cover a part that is of the display region A in the display panel 200 and that is adjacent to the non-display region C, to ensure that light obliquely emergent from an edge of the display region A to the non-display region C can be deflected to a direction close to that perpendicular to the substrate 1 after passing through the polarization grating 30, that is, light finally passing through the polarization grating 30 is emergent in a direction approximately perpendicular to the substrate 1, but not all light is necessarily emergent perpendicularly. In this way, light emergent from the non-display region C can be perceived in the visual sense, to achieve a display effect that the non-display region C is narrowed or disappears visually.

Further, to ensure that light incident to the liquid crystal functional film 100 is circularly polarized light, one or more phase retardation films 300 (which may also be referred to as phase retardation sheets) may be added between the liquid crystal functional film 100 and the display panel 200 based on a specific structure design requirement. The phase retardation film 300 may be, for example, a quarter-wave plate or the like. It should be noted that the phase retardation film 300 should cover at least the polarization grating 30 in the liquid crystal functional film 100. A size of the phase retardation film 300 may alternatively be set to be larger than that of the polarization grating 30. For example, the size of the phase retardation film 300 may be consistent with that of the liquid crystal functional film 100.

Based on a same inventive concept, embodiments of this application further provide a terminal, including a housing and the foregoing display apparatus provided in embodiments of this application. The terminal provided in this application can be used in all products for which a non-display region of a screen needs to be reduced, such as a monitor, a head-up display, lighting, and a vehicle lamp.

It is clear that persons skilled in the art can make various modifications and variations to this application without departing from the protection scope of this application. This application is intended to cover these modifications and variations of this application provided that they fall within the protection scope defined by the following claims.

## Claims

1. A liquid crystal functional film (100),
wherein the liquid crystal functional film is configured to be disposed in a non-display region and on a light exit side of a display panel (200);
the liquid crystal functional film comprises a substrate (1), an alignment layer (2) located on the substrate, and a liquid crystal layer (3) located on the alignment layer;
alignment molecules in the alignment layer are regularly and periodically arranged in a direction; and
orientation directions of liquid crystal molecules (31) in the liquid crystal layer follow an arrangement rule of the alignment molecules to present regular and periodic arrangement and form a polarization grating (30),
and the polarization grating is configured to deflect light obliquely emergent from a display (A) of the display panel to the non-display region (C) to be emergent in a front viewing direction of the non-display region.

2. A display apparatus, comprising a display panel and a liquid crystal functional film according to claim 1, wherein the crystal functional film is located on a light exit surface of the display panel.

3. The display apparatus according to claim 2, wherein liquid crystal molecules at different positions have different orientation directions in one arrangement periodicity of the liquid crystal molecules in the liquid crystal layer.

4. The display apparatus according to claim 3, wherein in the arrangement periodicity, the liquid crystal molecules at different positions sequentially rotate by an angle in an axial direction on a plane parallel to the substrate.

5. The display apparatus according to claim 4, wherein the arrangement periodicity is a distance corresponding to rotation of the liquid crystal molecules at different positions by 180 degrees or 360 degrees in the axial direction.

6. The display apparatus according to any one of claims 2 to 5, wherein arrangement periodicities in different regions of the liquid crystal layer are different or the same.

7. The display apparatus according to claim 6, wherein the arrangement periodicity of the liquid crystal molecules in the liquid crystal layer is 0.5 µm to 200 µm.

8. The display apparatus according to any one of claims 2 to 7, wherein the liquid crystal layer comprises a single liquid crystal layer or a plurality of stacked liquid crystal layers.

9. The display apparatus according to any one of claims 2 to 8, wherein a chiral material is doped in a liquid crystal material of the liquid crystal layer, and the liquid crystal molecules in the liquid crystal layer are twisted clockwise or counterclockwise in a thickness direction.

10. The display apparatus according to any one of claims 2 to 9, wherein a total thickness of the liquid crystal layer is below 200 µm.

11. The display apparatus according to any one of claims 2 to 10, wherein the polarization grating in the liquid crystal functional film further covers a part that is of the display region and that is adjacent to the non-display region.

12. The display apparatus according to any one of claims 2 to 11, further comprising a cover, wherein the cover is located between the liquid crystal functional film and the display panel, or the cover is located on the liquid crystal functional film.

13. The display apparatus according to any one of claims 2 to 12, further comprising one or more phase retardation films located between the liquid crystal functional film and the display panel.

14. The display apparatus according to any one of claims 2 to 13, wherein there are one or more liquid crystal functional films.

15. The display apparatus according to any one of claims 2 to 14, wherein the display panel is one display module or comprises a plurality of display modules that are spliced with each other.

16. The display apparatus according to any one of claims 2 to 15, wherein the non-display region of the display panel comprises one or a combination of a frame region, a hole region, and a bending region.

17. A terminal, comprising a housing and the display apparatus according to any one of claims 2 to 16.

## Patentansprüche

1. Flüssigkristallfunktionsfilm (100), wobei der Flüssigkristallfunktionsfilm dazu konfiguriert ist, in einem Nichtanzeigebereich und auf einer Lichtaustrittsseite eines Anzeigefeldes (200) angeordnet zu sein;
der Flüssigkristallfunktionsfilm ein Substrat (1), eine Ausrichtungsschicht (2), die sich auf dem Substrat befindet, und eine Flüssigkristallschicht (3), die sich auf der Ausrichtungsschicht befindet, umfasst;
Ausrichtungsmoleküle in der Ausrichtungsschicht regelmäßig und periodisch in einer Richtung angeordnet sind; und
Ausrichtungsrichtungen von Flüssigkristallmolekülen (31) in der Flüssigkristallschicht einer Anordnungsregel der Ausrichtungsmoleküle folgen, um eine regelmäßige und periodische Anordnung zu präsentieren und ein Polarisationsgitter (30) zu bilden, und das Polarisationsgitter dazu konfiguriert ist, Licht, das schräg von einer Anzeige (A) des Anzeigefeldes zu dem Nichtanzeigebereich (C) austritt, so abzulenken, dass es in einer vorderen Blickrichtung des Nichtanzeigebereichs austritt.

2. Anzeigevorrichtung, umfassend ein Anzeigefeld und einen Flüssigkristallfunktionsfilm gemäß Anspruch 1, wobei sich der Kristallfunktionsfilm auf einer Lichtaustrittsfläche des Anzeigefeldes befindet.

3. Anzeigevorrichtung gemäß Anspruch 2, wobei die Flüssigkristallmoleküle an unterschiedlichen Positionen unterschiedliche Ausrichtungsrichtungen in einer Anordnungsperiodizität der Flüssigkristallmoleküle in der Flüssigkristallschicht aufweisen.

4. Anzeigevorrichtung gemäß Anspruch 3, wobei die Flüssigkristallmoleküle in der Anordnungsperiodizität an unterschiedlichen Positionen nacheinander um einen Winkel in einer axialen Richtung auf einer Ebene parallel zu dem Substrat rotieren.

5. Anzeigevorrichtung gemäß Anspruch 4, wobei die Anordnungsperiodizität ein Abstand ist, der der Rotation der Flüssigkristallmoleküle an unterschiedlichen Positionen um 180 Grad oder 360 Grad in axialer Richtung entspricht.

6. Anzeigevorrichtung gemäß einem der Ansprüche 2 bis 5, wobei die Anordnungsperiodizitäten in unterschiedlichen Bereichen der Flüssigkristallschicht unterschiedlich oder gleich sind.

7. Anzeigevorrichtung gemäß Anspruch 6, wobei die Anordnungsperiodizität der Flüssigkristallmoleküle in der Flüssigkristallschicht 0,5 µm bis 200 µm beträgt.

8. Anzeigevorrichtung gemäß einem der Ansprüche 2 bis 7, wobei die Flüssigkristallschicht eine einzelne Flüssigkristallschicht oder eine Vielzahl von gestapelten Flüssigkristallschichten umfasst.

9. Anzeigevorrichtung gemäß einem der Ansprüche 2 bis 8, wobei ein chirales Material in ein Flüssigkristallmaterial der Flüssigkristallschicht dotiert ist und die Flüssigkristallmoleküle in der Flüssigkristallschicht in einer Dickenrichtung im oder gegen den Uhrzeigersinn verdreht sind.

10. Anzeigevorrichtung gemäß einem der Ansprüche 2 bis 9, wobei die Gesamtdicke der Flüssigkristallschicht unter 200 µm liegt.

11. Anzeigevorrichtung gemäß einem der Ansprüche 2 bis 10, wobei das Polarisationsgitter in dem Flüssigkristallfunktionsfilm ferner einen Teil des Anzeigebereichs abdeckt, der an den Nichtanzeigebereich angrenzt.

12. Anzeigevorrichtung gemäß einem der Ansprüche 2 bis 11, ferner umfassend eine Abdeckung, wobei sich die Abdeckung zwischen dem Flüssigkristallfunktionsfilm und dem Anzeigefeld befindet oder sich die Abdeckung auf dem Flüssigkristallfunktionsfilm befindet.

13. Anzeigevorrichtung gemäß einem der Ansprüche 2 bis 12, ferner umfassend einen oder mehrere Phasenverzögerungsfilme, die sich zwischen dem Flüssigkristallfunktionsfilm und dem Anzeigefeld befinden.

14. Anzeigevorrichtung gemäß einem der Ansprüche 2 bis 13, wobei ein oder mehrere Flüssigkristallfunktionsfilme vorhanden sind.

15. Anzeigevorrichtung gemäß einem der Ansprüche 2 bis 14, wobei das Anzeigefeld ein Anzeigemodul ist oder eine Vielzahl von Anzeigemodulen umfasst, die miteinander verbunden sind.

16. Anzeigevorrichtung gemäß einem der Ansprüche 2 bis 15, wobei der Nichtanzeigebereich des Anzeigefeldes einen oder eine Kombination aus einem Rahmenbereich, einem Lochbereich und einem Biegebereich umfasst.

17. Endgerät, umfassend ein Gehäuse und die Anzeigevorrichtung gemäß einem der Ansprüche 2 bis 16.

## Revendications

1. Film fonctionnel à cristaux liquides (100), dans lequel le film fonctionnel à cristaux liquides est configuré pour être disposé dans une région sans affichage et sur le côté de sortie de lumière d'un panneau d'affichage (200) ;
le film fonctionnel à cristaux liquides comprend un substrat (1), une couche d'alignement (2) située sur le substrat et une couche de cristaux liquides (3) située sur la couche d'alignement ;
les molécules d'alignement dans la couche d'alignement sont disposées de manière régulière et périodique dans une direction ; et
les directions d'orientation des molécules de cristaux liquides (31) dans la couche de cristaux liquides suivent une règle d'agencement des molécules d'alignement pour présenter un agencement régulier et périodique et former un réseau de polarisation (30), et le réseau de polarisation est configuré pour dévier la lumière émergeant obliquement d'un affichage (A) du panneau d'affichage vers la région sans affichage (C) pour émerger dans une direction de vision avant de la région sans affichage.

2. Appareil d'affichage, comprenant un panneau d'affichage et un film fonctionnel à cristaux liquides selon la revendication 1, dans lequel le film fonctionnel à cristaux est situé sur une surface de sortie de lumière du panneau d'affichage.

3. Appareil d'affichage selon la revendication 2, dans lequel les molécules de cristaux liquides à différentes positions ont des directions d'orientation différentes dans une périodicité d'agencement des molécules de cristaux liquides dans la couche de cristaux liquides.

4. Appareil d'affichage selon la revendication 3, dans lequel, dans la périodicité d'agencement, les molécules de cristaux liquides à différentes positions tournent séquentiellement à raison d'un angle dans une direction axiale sur un plan parallèle au substrat.

5. Appareil d'affichage selon la revendication 4, dans lequel la périodicité d'agencement est une distance correspondant à la rotation des molécules de cristaux liquides à différentes positions à raison de 180 degrés ou de 360 degrés dans la direction axiale.

6. Appareil d'affichage selon l'une quelconque des revendications 2 à 5, dans lequel les périodicités d'agencement dans différentes régions de la couche de cristaux liquides sont différentes ou identiques.

7. Appareil d'affichage selon la revendication 6, dans lequel la périodicité d'agencement des molécules de cristaux liquides dans la couche de cristaux liquides est de 0,5 µm à 200 µm.

8. Appareil d'affichage selon l'une quelconque des revendications 2 à 7, dans lequel la couche de cristaux liquides comprend une seule couche de cristaux liquides ou une pluralité de couches de cristaux liquides empilées.

9. Appareil d'affichage selon l'une quelconque des revendications 2 à 8, dans lequel un matériau chiral est dopé dans un matériau à cristaux liquides de la couche de cristaux liquides, et les molécules de cristaux liquides dans la couche de cristaux liquides sont torsadées dans le sens horaire ou antihoraire dans le sens de l'épaisseur.

10. Appareil d'affichage selon l'une quelconque des revendications 2 à 9, dans lequel une épaisseur totale de la couche de cristaux liquides est inférieure à 200 µm.

11. Appareil d'affichage selon l'une quelconque des revendications 2 à 10, dans lequel le réseau de polarisation dans le film fonctionnel à cristaux liquides couvre également une partie qui fait partie de la région d'affichage et qui est adjacente à la région sans affichage.

12. Appareil d'affichage selon l'une quelconque des revendications 2 à 11, comprenant également un couvercle, dans lequel le couvercle est situé entre le film fonctionnel à cristaux liquides et le panneau d'affichage, ou le couvercle est situé sur le film fonctionnel à cristaux liquides.

13. Appareil d'affichage selon l'une quelconque des revendications 2 à 12, comprenant également un ou plusieurs films de retard de phase situés entre le film fonctionnel à cristaux liquides et le panneau d'affichage.

14. Appareil d'affichage selon l'une quelconque des revendications 2 à 13, dans lequel il existe un ou plusieurs films fonctionnels à cristaux liquides.

15. Appareil d'affichage selon l'une quelconque des revendications 2 à 14, dans lequel le panneau d'affichage est un module d'affichage ou comprend une pluralité de modules d'affichage qui sont raccordés les uns aux autres.

16. Appareil d'affichage selon l'une quelconque des revendications 2 à 15, dans lequel la région sans affichage du panneau d'affichage comprend une combinaison d'une région de cadre, d'une région de trou et d'une région de courbure.

17. Terminal comprenant un boîtier et un appareil d'affichage selon l'une quelconque des revendications 2 à 16.
